# EUROPEAN PATENT APPLICATION

(11) **EP 4 408 112 A1**
(43) Date of publication of application: **31.07.2024**
(21) Application number: 22882832.3
(22) Date of filing: 18.10.2022
(51) Int. Cl.: H04W 74/08

(54) **COMMUNICATION METHOD AND APPARATUS**

(30) Priority: 20.10.2021 CN 202111219451; 10.11.2021 CN 202111327525
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); OLOFSSON, Henrik, Shenzhen, Guangdong 518129 (CN)
(74) Representative: Körber, Martin Hans
(86) International application number: PCT/CN2022/125839
(87) International publication number: WO 2023/066226

(57) **Abstract**

Embodiments of this application provide a communication method and apparatus. The method includes: A communication device performs listen before talk LBT detection. The communication device sends first information based on a target event, where the first information includes detection information of the LBT detection; the target event includes any one of the following: the LBT detection has a potential risk, a communication process between the communication device and a network device has a potential risk, the LBT detection fails, and the communication process between the communication device and the network device fails; and the communication process between the communication device and the network device is performed based on the LBT detection. According to the solutions of this application, when UE detects that the target event occurs, the UE reports the detection information of the LBT detection to a base station. The base station may optimize the LBT detection based on the detection information of the LBT detection that is reported by the UE. Therefore, transmission efficiency of the UE on an unlicensed frequency band is improved, and a waiting delay of the UE is reduced.

## Description

This application claims priorities to Chinese Patent Application No. 202111219451.0, filed with the China National Intellectual Property Administration on October 20, 2021 and entitled "COMMUNICATION METHOD AND APPARATUS", and to Chinese Patent Application No. 202111327525.2, filed with the China National Intellectual Property Administration on November 10, 2021 and entitled "COMMUNICATION METHOD AND APPARATUS", both of which are incorporated herein by reference in their entireties.

### TECHNICAL FIELD

This application relates to the field of communication technologies, and more specifically, to a communication method and apparatus.

### BACKGROUND

Radio spectrum resources are limited resources. Usually, to use the radio spectrum resources, a license (or usually referred to as a permit) issued by a government of a local country or region is required. However, as a quantity of access network devices increases, the limited spectrum resources cannot meet a high data service requirement. To resolve this problem, a method for performing communication on an unlicensed frequency band is provided. Before performing communication on the unlicensed frequency band, a terminal needs to perform listen before talk (listen before talk, LBT) detection. The terminal and a base station may fail to communicate with each other on the unlicensed frequency band, or a communication effect is poor. In addition, in a multi-connectivity scenario, communication between the terminal and the base station may also fail. Therefore, how to optimize communication of the terminal is an urgent problem to be resolved.

### SUMMARY

Embodiments of this application provide a communication method and apparatus.

According to a first aspect, a communication method is provided, including:
A communication device performs listen before talk LBT detection. The communication device sends first information based on a target event. The first information includes detection information of the LBT detection. The target event includes any one of the following:
The LBT detection has a potential risk, a communication process between the communication device and a network device has a potential risk, the LBT detection fails, and the communication process between the communication device and the network device fails. The communication process between the communication device and the network device is performed based on the LBT detection.

According to the solution of this application, when UE detects that the target event occurs, the UE records the detection information of the LBT detection. Further, the UE reports the detection information of the LBT detection to a base station. The base station may optimize the LBT detection based on the detection information of the LBT detection that is reported by the UE. Therefore, transmission efficiency of the UE on an unlicensed frequency band is improved, and a waiting delay of the UE is reduced.

With reference to the first aspect, in some implementations of the first aspect, that the LBT detection has a potential risk includes:
A quantity of non-idle detection windows detected during the LBT detection is greater than a first threshold, and in this case, the detection information includes the quantity of non-idle detection windows; and/or a proportion of an idle detection window in which a difference between an energy detection result and a second threshold is less than a third threshold is greater than a fourth threshold, in this case, the detection information includes the proportion, the first information further includes the second threshold, and the second threshold is an energy detection threshold for performing the LBT detection.

With reference to the first aspect, in some implementations of the first aspect, that the LBT detection has a potential risk includes:
Before the communication device successfully accesses a cell, a quantity of times that the communication device attempts to access the cell is greater than a fifth threshold, or when the communication device attempts to access a cell, a quantity of low-layer LBT failure indications received by a media access control (media access control, MAC) layer is greater than a low-layer LBT failure indication threshold. The cell is a cell of the network device. It may be understood that the lower layer is a lower layer of the MAC layer, for example, a physical layer (physical layer). Alternatively, the lower layer may be understood as: Transmission from the lower layer to the MAC layer is performed in a receiving direction or a sending direction.

With reference to the first aspect, in some implementations of the first aspect, that the communication device attempts to access the cell includes: The communication device attempts to access the cell on a plurality of physical channels of a same bandwidth part BWP. In this case, the detection information includes information about the plurality of physical channels, and one or more of the following:
duration for performing the LBT detection, a proportion of an idle detection window, a proportion of a non-idle detection window, and an energy detection result of a detection window.

With reference to the first aspect, in some implementations of the first aspect, that the communication device attempts to access the cell includes: The communication device attempts to access the cell in a plurality of BWPs. In this case, the detection information includes information about the plurality of BWPs, and one or more of the following:
duration for performing the LBT detection, and a failure indication of the LBT detection.

With reference to the first aspect, in some implementations of the first aspect, the method further includes:

The communication device sends data and/or signaling to the network device in a reference period. The communication device receives negative acknowledgment NACK information or acknowledgment ACK information of the data and/or the signaling from the network device in the reference period.

That the communication process between the communication device and the network device has a potential risk includes any one of the following:

A proportion of the NACK information is greater than a sixth threshold, a proportion of the ACK information is less than a seventh threshold, a quantity of retransmissions of the data and/or the signaling is greater than an eighth threshold, and the quantity of low-layer LBT failure indications received by the MAC layer is greater than the low-layer LBT failure indication threshold. In this case, the first information further includes any one of the following:
the proportion of the NACK information, the proportion of the ACK information, the quantity of retransmissions of the data and/or the signaling, the quantity of low-layer LBT failure indications received by the MAC layer, low-layer LBT failure indication detection time, and a maximum quantity of low-layer LBT failure indications.

With reference to the first aspect, in some implementations of the first aspect, that the LBT detection fails includes:
The communication device cannot access a cell on an unlicensed frequency band, and the cell is a cell of the network device.

In this case, the detection information includes one or more of the following:
a quantity of attempts to access the cell, a proportion of an idle detection window, a proportion of a non-idle detection window, an energy detection result of a detection window, duration for performing the LBT detection, a second threshold, and a quantity of backoff times. The second threshold is an energy detection threshold for performing the LBT detection.

With reference to the first aspect, in some implementations of the first aspect, that the LBT detection fails includes:
The communication device accesses a cell on a first channel of an unlicensed frequency band, but cannot communicate with the network device through the first channel, and the cell is a cell of the network device.

In this case, the detection information includes one or more of the following:
a quantity of communication attempts through the first channel, a proportion of an idle detection window, a proportion of a non-idle detection window, an energy detection result of a detection window, duration for performing the LBT detection, a second threshold, and a quantity of backoff times. The second threshold is an energy detection threshold for performing the LBT detection.

With reference to the first aspect, in some implementations of the first aspect, the method further includes:
The communication device sends data and/or signaling to the network device in a reference period. The communication device receives NACK information or ACK information of the data and/or the signaling from the network device in the reference period.

That the communication process between the communication device and the network device fails includes any one of the following:
A proportion of the NACK information is greater than a ninth threshold, a proportion of the ACK information is less than a tenth threshold, and a quantity of retransmissions of the data and/or the signaling is greater than an eleventh threshold.

In this case, the detection information further includes one or more of the following:
a quantity of times of performing the LBT detection, a proportion of an idle detection window, a proportion of a non-idle detection window, an energy detection result of a detection window, duration for performing the LBT detection, a second threshold, and a quantity of backoff times, where the second threshold is an energy detection threshold for performing the LBT detection.

With reference to the first aspect, in some implementations of the first aspect, the method further includes:
The communication device receives second information. The second information is used to increase the second threshold.

According to the solution of this application, if a priority of to-be-transmitted data is high or a data amount of the to-be-transmitted data is small, an energy detection threshold for LBT detection may be increased, so that the UE preferentially preempts a channel, to increase a data transmission rate and reduce a transmission delay.

With reference to the first aspect, in some implementations of the first aspect, the method further includes:
The communication device receives second information. The second information includes a second channel, and the second information indicates to perform the LBT detection on the second channel. A quantity of times that the target event occurs on the second channel is less than a twelfth threshold.

It should be understood that, when an amount of to-be-transmitted data is large, the UE needs to perform transmission on a proper channel for a long period of time. Therefore, according to the solution of this application, the base station may indicate, to the UE, the second channel on which the target event occurs less frequently. This facilitates subsequent data transmission of the UE.

With reference to the first aspect, in some implementations of the first aspect, the method further includes:
The communication device receives second information. The second information is used to increase a transmission priority of to-be-transmitted data.

With reference to the first aspect, in some implementations of the first aspect, the method further includes:
The communication device receives second information.

The second information is used to decrease the second threshold. Alternatively, the second information is used to decrease a transmission priority of to-be-transmitted data.

According to the solution of this application, when a fourth type of target event occurs, the second information sent by the base station to the UE is used to decrease the second threshold or decrease the priority of the to-be-transmitted data. When the UE performs subsequent LBT detection, a condition for successful LBT detection becomes more stringent. If the LBT detection still succeeds under the more stringent condition, an occurrence probability of the target event becomes lower when the UE subsequently communicates with the base station.

With reference to the first aspect, in some implementations of the first aspect, the method further includes:
The communication device receives third information. The third information indicates to perform communication on a licensed frequency band.

With reference to the first aspect, in some implementations of the first aspect, the first information further includes one or more of the following:
an identifier of a cell, a moment at which the target event occurs, a type of the to-be-transmitted data, a data amount of the to-be-transmitted data, and the transmission priority of the to-be-transmitted data, where the cell is a cell of the network device.

According to a second aspect, a communication method is provided, including:
A network device receives first information. The first information includes detection information of listen before talk LBT detection.

The first information is based on a target event, and the target event includes any one of the following:
The LBT detection has a potential risk, a communication process between a communication device and the network device has a potential risk, the LBT detection fails, and the communication process between the communication device and the network device fails.

The communication process between the communication device and the network device is performed based on the LBT detection.

With reference to the second aspect, in some implementations of the second aspect, the method further includes:
The network device determines second information based on the first information. The second information is used to optimize the LBT detection. The network device sends the second information.

According to the solution of this application, when UE detects that the target event occurs, the UE records the detection information of the LBT detection. Further, the UE reports the detection information of the LBT detection to a base station. The base station may optimize the LBT detection based on the detection information of the LBT detection that is reported by the UE. Therefore, transmission efficiency of the UE on an unlicensed frequency band is improved, and a waiting delay of the UE is reduced.

With reference to the second aspect, in some implementations of the second aspect, the detection information includes a quantity of non-idle detection windows detected during the LBT detection; and/or the detection information includes a proportion of an idle detection window in which a difference between an energy detection result and a second threshold is less than a third threshold, the first information further includes the second threshold, and the second threshold is an energy detection threshold for performing the LBT detection.

With reference to the second aspect, in some implementations of the second aspect:
the detection information includes information about a plurality of channels in a same bandwidth part BWP, and one or more of the following:
duration for performing the LBT detection, a proportion of an idle detection window, a proportion of a non-idle detection window, and an energy detection result of a detection window; or
the detection information includes information about a plurality of BWPs, and one or more of the following:
   the duration for performing the LBT detection, and a failure indication of the LBT detection.

With reference to the second aspect, in some implementations of the second aspect, the method further includes:

The network device receives data and/or signaling from the communication device in a reference period. The network device sends negative acknowledgment NACK information or acknowledgment ACK information of the data and/or the signaling to the communication device in the reference period.

A proportion of the NACK information is greater than a sixth threshold, a proportion of the ACK information is less than a seventh threshold, the quantity of retransmissions of the data and/or the signaling is greater than an eighth threshold, or the quantity of low-layer LBT failure indications received by a MAC layer is greater than a low-layer LBT failure indication threshold.

The first information further includes any one of the following:
the proportion of the NACK information, the proportion of the ACK information, the quantity of retransmissions of the data and/or the signaling, the quantity of low-layer LBT failure indications received by the MAC layer, low-layer LBT failure indication detection time, and a maximum quantity of low-layer LBT failure indications. The low-layer LBT failure indication detection time (lbt-FailureDetectionTimer) and the maximum quantity of low-layer LBT failure indications (lbt-FailureInstanceMaxCount) may be carried in LBT failure recovery configuration information (LBT-FailureRecoveryConfig). For example, when the quantity of low-layer LBT failure indications received by the MAC layer exceeds the maximum quantity of low-layer LBT failure indications, it is determined that transmission cannot be performed on a current grant-free channel because of an LBT failure.

With reference to the second aspect, in some implementations of the second aspect, the communication device cannot access a cell on an unlicensed frequency band, and the cell is a cell of the network device.

The detection information includes one or more of the following:
a quantity of times that the communication device attempts to access the cell, a proportion of an idle detection window, a proportion of a non-idle detection window, an energy detection result of a detection window, duration for performing the LBT detection, a second threshold, and a quantity of backoff times, where the second threshold is an energy detection threshold for performing the LBT detection.

With reference to the second aspect, in some implementations of the second aspect, the communication device accesses a cell on a first channel of an unlicensed frequency band, but cannot communicate with the network device through the first channel, and the cell is a cell of the network device.

The detection information includes one or more of the following:
a quantity of times that the communication device attempts to perform communication through the first channel, a proportion of an idle detection window, a proportion of a non-idle detection window, an energy detection result of a detection window, duration for performing the LBT detection, a second threshold, and a quantity of backoff times, where the second threshold is an energy detection threshold for performing the LBT detection.

With reference to the second aspect, in some implementations of the second aspect, the method further includes:
The network device receives data and/or signaling from the communication device in a reference period. The network device sends negative acknowledgment NACK information or acknowledgment ACK information of the data and/or the signaling to the communication device in the reference period.

A proportion of the NACK information is greater than a ninth threshold, a proportion of the ACK information is less than a tenth threshold, or the quantity of retransmissions of the data and/or the signaling is greater than an eleventh threshold.

The detection information includes one or more of the following:
a quantity of times of performing the LBT detection, a proportion of an idle detection window, a proportion of a non-idle detection window, an energy detection result of a detection window, duration for performing the LBT detection, a second threshold, and a quantity of backoff times.

With reference to the second aspect, in some implementations of the second aspect, the second information is used to increase the second threshold.

According to the solution of this application, if a priority of to-be-transmitted data is high or a data amount of the to-be-transmitted data is small, an energy detection threshold for LBT detection may be increased, so that the UE preferentially preempts a channel, to increase a data transmission rate and reduce a transmission delay.

With reference to the second aspect, in some implementations of the second aspect, the second information includes a second channel, the second information indicates to perform the LBT detection on the second channel, and a quantity of times that the target event occurs on the second channel is less than a twelfth threshold.

It should be understood that, when an amount of to-be-transmitted data is large, the UE needs to perform transmission on a proper channel for a long period of time. Therefore, according to the solution of this application, the base station may indicate, to the UE, the second channel on which the target event occurs less frequently. This facilitates subsequent data transmission of the UE.

With reference to the second aspect, in some implementations of the second aspect, the second information is used to increase a transmission priority of the to-be-transmitted data.

With reference to the second aspect, in some implementations of the second aspect, the second information is used to decrease the second threshold. Alternatively, the second information is used to decrease a transmission priority of the to-be-transmitted data.

According to the solution of this application, when a fourth type of target event occurs, the second information sent by the base station to the UE is used to decrease the second threshold or decrease the priority of the to-be-transmitted data. When the UE performs subsequent LBT detection, a condition for successful LBT detection becomes more stringent. If the LBT detection still succeeds under the more stringent condition, an occurrence probability of the target event becomes lower when the UE subsequently communicates with the base station.

With reference to the second aspect, in some implementations of the second aspect, the method further includes:
The network device determines third information based on the first information. The third information indicates to perform communication on a licensed frequency band. The network device sends the third information.

With reference to the second aspect, in some implementations of the second aspect:
the first information further includes one or more of the following:
an identifier of a cell, a moment at which the target event occurs, a type of the to-be-transmitted data, a data amount of the to-be-transmitted data, and the transmission priority of the to-be-transmitted data, where the cell is a cell of the network device.

According to a third aspect, a communication method is provided, including:
A communication device obtains first indication information. The first indication information indicates whether the communication device records random access information between the communication device and a target secondary node SN when random access between the communication device and the target SN fails.

When the random access between the communication device and the target SN fails, the communication device determines, based on the first indication information, whether to record the random access information between the communication device and the target SN.

The random access information includes a large amount of content, and occupies a large quantity signaling bits. Therefore, according to the solution of this application, UE may determine, based on the first indication information, whether to record the random access information. When the UE does not need to record the random access information, storage space of the UE #1 can be saved, and less signaling is wasted.

With reference to the third aspect, in some implementations of the third aspect, when the communication device records the random access information between the communication device and the target SN, the method further includes:

The communication device sends the random access information between the communication device and the target SN.

According to a fourth aspect, a communication method is provided, including:
A master node MN obtains first indication information. The first indication information indicates whether a communication device records random access information between the communication device and a target secondary node SN when random access between the communication device and the target SN fails. The MN sends the first indication information.

The random access information includes a large amount of content, and occupies a large quantity signaling bits. Therefore, according to the solution of this application, the master node may send the first indication information to UE, and the UE may determine, based on the first indication information, whether to record the random access information. When the UE does not need to record the random access information, storage space of the UE can be saved, and less signaling is wasted.

With reference to the fourth aspect, in some implementations of the fourth aspect, the method further includes:
The MN receives the random access information between the communication device and the target SN. The MN sends the random access information between the communication device and the target SN.

With reference to the fourth aspect, in some implementations of the fourth aspect, that the MN sends the random access information between the communication device and the target SN includes:
The MN sends the random access information between the communication device and the target SN to the target SN; or
the MN sends the random access information between the communication device and the target SN to a source SN.

With reference to the fourth aspect, in some implementations of the fourth aspect, that an MN obtains first indication information includes:
The MN obtains the first indication information from the target SN.

According to a fifth aspect, a communication method is provided, including:
A master node MN obtains third information. The third information is recorded by a communication device when a connection between the communication device and a first secondary node SN fails, and the third information includes measurement information of a cell. The MN determines, based on the third information, that the first SN is a source SN or a target SN when the communication device performs SN handover. The first MN sends the third information and second indication information to the first SN. The second indication information indicates whether there is a direct communication interface between the MN and a base station to which the cell whose measurement information is included in the third information belongs.

It should be understood that, when UE performs SN handover, if there is no direct communication interface between a target SN and the MN, the SN handover may fail. According to the solution of this application, the MN may send the third information and the second indication information to the first SN, so that the first SN can determine, based on the third information and the second indication information, a second SN that has a direct communication interface to the MN, to improve a success rate of subsequent SN handover performed by the UE.

With reference to the fifth aspect, in some implementations of the fifth aspect, the third information further includes one or more of the following:
a first primary cell and a first secondary cell in which a connection failure occurs, a second primary cell and a second secondary cell before the connection failure occurs, and duration information, where the duration information is duration between a moment at which the UE is handed over to the second primary cell and the second secondary cell to a moment at which a current connection fails.

According to a sixth aspect, a communication method is provided, including:
A first secondary node SN obtains third information and second indication information. The third information is recorded by a communication device when a connection between the communication device and the first SN fails, and the third information includes measurement information of a cell. The second indication information indicates whether there is a direct communication interface between a master node MN and a base station to which the cell whose measurement information is included in the third information belongs. The first SN selects a second SN based on the third information and the second indication information, and there is a direct communication interface between the second SN and the first MN.

It should be understood that, when UE performs SN handover, if there is no direct communication interface between a target SN and the MN, the SN handover may fail. According to the solution of this application, the first SN may obtain the third information and the second indication information from the MN, so that the first SN can select, based on the third information and the second indication information, a second SN that has a direct communication interface to the MN, to improve a success rate of subsequent SN handover performed by the UE.

With reference to the sixth aspect, in some implementations of the sixth aspect, the third information further includes one or more of the following:
a first primary cell and a first secondary cell in which a connection failure occurs, a second primary cell and a second secondary cell before the connection failure occurs, and duration information, where the duration information is duration between a moment at which the UE is handed over to the second primary cell and the second secondary cell to a moment at which a current connection fails.

According to a seventh aspect, a communication device is provided, including:
a transceiver unit, and a processing unit connected to the transceiver unit.

The processing unit is configured to perform listen before talk LBT detection, and record first information. The first information includes detection information of the LBT detection.

The transceiver unit is configured to send the first information based on a target event. The target event includes any one of the following:
The LBT detection has a potential risk, a communication process between the communication device and a network device has a potential risk, the LBT detection fails, and the communication process between the communication device and the network device fails. The communication process between the communication device and the network device is performed based on the LBT detection.

With reference to the seventh aspect, in some implementations of the seventh aspect,
the transceiver unit is further configured to send data and/or signaling to the network device in a reference period.

The transceiver unit is further configured to receive negative acknowledgment NACK information or acknowledgment ACK information of the data and/or the signaling from the network device in the reference period.

With reference to the seventh aspect, in some implementations of the seventh aspect, the transceiver unit is further configured to receive second information.

In a case, the second information is used to increase a second threshold.

In another case, the second information includes a second channel, and the second information indicates to perform the LBT detection on the second channel. A quantity of times that the target event occurs on the second channel is less than a twelfth threshold.

In another case, the second information is used to increase a transmission priority of to-be-transmitted data.

In another case, the second information is used to decrease the second threshold. Alternatively, the second information is used to decrease a transmission priority of to-be-transmitted data.

With reference to the seventh aspect, in some implementations of the seventh aspect, the transceiver unit is further configured to receive third information. The third information indicates to perform communication on a licensed frequency band.

According to an eighth aspect, a network device is provided, including:
a transceiver unit, and a processing unit connected to the transceiver unit.

The transceiver unit is configured to receive first information. The first information includes detection information of listen before talk LBT detection.

The first information is based on a target event, and the target event includes any one of the following:
The LBT detection has a potential risk, a communication process between a communication device and the network device has a potential risk, the LBT detection fails, and the communication process between the communication device and the network device fails. The communication process between the communication device and the network device is performed based on the LBT detection.

With reference to the eighth aspect, in some implementations of the eighth aspect:
the processing unit is configured to determine second information based on the first information. The second information is used to optimize the LBT detection.

The transceiver unit is further configured to send the second information.

With reference to the eighth aspect, in some implementations of the eighth aspect:
the transceiver unit is further configured to receive data and/or signaling from the communication device in a reference period.

The transceiver unit is further configured to send negative acknowledgment NACK information or acknowledgment ACK information of the data and/or the signaling to the communication device in the reference period.

With reference to the eighth aspect, in some implementations of the eighth aspect:
the processing unit is configured to determine third information based on the first information. The third information indicates to perform communication on a licensed frequency band.

The transceiver unit is further configured to send the third information.

According to a ninth aspect, a communication device is provided, including:
a transceiver unit, and a processing unit connected to the transceiver unit.

The transceiver unit is configured to obtain first indication information. The first indication information indicates whether the communication device records random access information between the communication device and a target secondary node SN when random access between the communication device and the target SN fails.

When the random access between the communication device and the target SN fails, the processing unit is configured to determine, based on the first indication information, whether to record the random access information between the communication device and the target SN.

With reference to the ninth aspect, in some implementations of the ninth aspect:
the transceiver unit is further configured to send the random access information between the communication device and the target SN.

According to a tenth aspect, a master base station MN is provided, including:
a transceiver unit, and a processing unit connected to the transceiver unit.

The transceiver unit is configured to obtain first indication information. The first indication information indicates whether a communication device records random access information between the communication device and a target secondary node SN when random access between the communication device and the target SN fails.

The transceiver unit is further configured to send the first indication information.

With reference to the tenth aspect, in some implementations of the tenth aspect:
the transceiver unit is further configured to receive the random access information between the communication device and the target SN.

The transceiver unit is further configured to send the random access information between the communication device and the target SN.

With reference to the tenth aspect, in some implementations of the tenth aspect:
the transceiver unit is further configured to send the random access information between the communication device and the target SN to the target SN. Alternatively, the transceiver unit is further configured to send the random access information between the communication device and the target SN to a source SN.

With reference to the tenth aspect, in some implementations of the tenth aspect:
the transceiver is configured to obtain the first indication information from the target SN.

According to an eleventh aspect, a master base station MN is provided, including:
a transceiver unit, and a processing unit connected to the transceiver unit.

The transceiver unit is configured to obtain third information. The third information is recorded by a communication device when a connection between the communication device and a first secondary node SN fails, and the third information includes measurement information of a cell.

The processing unit is configured to determine, based on the third information, that the first SN is a source SN or a target SN when the communication device performs SN handover.

The transceiver unit is further configured to send the third information and second indication information to the first SN. The second indication information indicates whether there is a direct communication interface between the MN and a base station to which the cell whose measurement information is included in the third information belongs.

With reference to the eleventh aspect, in some implementations of the eleventh aspect, the third information further includes one or more of the following:
a first primary cell and a first secondary cell in which a connection failure occurs, a second primary cell and a second secondary cell before the connection failure occurs, and duration information. The duration information is duration between a moment at which the UE is handed over to the second primary cell and the second secondary cell to a moment at which a current connection fails.

According to a twelfth aspect, a first secondary node SN is provided, including:
a transceiver unit, and a processing unit connected to the transceiver unit.

The transceiver unit is configured to obtain third information and second indication information. The third information is recorded by a communication device when a connection between the communication device and the first SN fails, and the third information includes measurement information of a cell. The second indication information indicates whether there is a direct communication interface between a master node MN and a base station to which the cell whose measurement information is included in the third information belongs.

The processing unit is configured to select a second SN based on the third information and the second indication information, and there is a direct communication interface between the second SN and the first MN.

With reference to the twelfth aspect, in some implementations of the twelfth aspect, the third information further includes one or more of the following:
a first primary cell and a first secondary cell in which a connection failure occurs, a second primary cell and a second secondary cell before the connection failure occurs, and duration information. The duration information is duration between a moment at which the UE is handed over to the second primary cell and the second secondary cell to a moment at which a current connection fails.

According to a thirteenth aspect, a communication device is provided, including a communication interface and a processor. When the communication device runs, the processor executes a computer program or instructions stored in a memory, so that the communication device performs the method according to any possible implementation of the first aspect to the sixth aspect. The memory may be located in the processor, or may be implemented by using a chip independent of the processor. This is not specifically limited in this application.

According to a fourteenth aspect, a computer-readable storage medium is provided. The computer-readable storage medium includes a computer program. When the computer program is run on a computer, the computer is enabled to perform the method according to any possible implementation of the first aspect to the sixth aspect.

According to a fifteenth aspect, a chip is provided. A processing circuit is disposed on the chip, and the processing circuit is configured to perform the method according to any possible implementation of the first aspect to the sixth aspect.

According to a sixteenth aspect, a computer program product is provided. The computer program product includes a computer program (or may be referred to as code or instructions). When the computer program is run, the computer is enabled to perform the method according to any possible implementation of the first aspect to the sixth aspect.

### BRIEF DESCRIPTION OF DRAWINGS

FIG. 1 shows a system architecture to which an embodiment of this application is applicable;
FIG. 2 is a schematic interaction diagram of a method according to this application;
FIG. 3 is a schematic interaction diagram of a method according to this application;
FIG. 4 is a schematic interaction diagram of a method according to this application;
FIG. 5 is a schematic block diagram of a communication apparatus according to this application;
FIG. 6 is a schematic block diagram of a communication device according to this application; and
FIG. 7 is a schematic interaction diagram of a method according to this application.

### DESCRIPTION OF EMBODIMENTS

The following describes technical solutions of embodiments in this application with reference to accompanying drawings.

The technical solutions of embodiments of this application may be applied to various communication systems, for example, a global system for mobile communication (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and a 5th generation (5th Generation, 5G) communication system or new radio (New Radio, NR), or a future 6th generation (6th Generation, 6G) system.

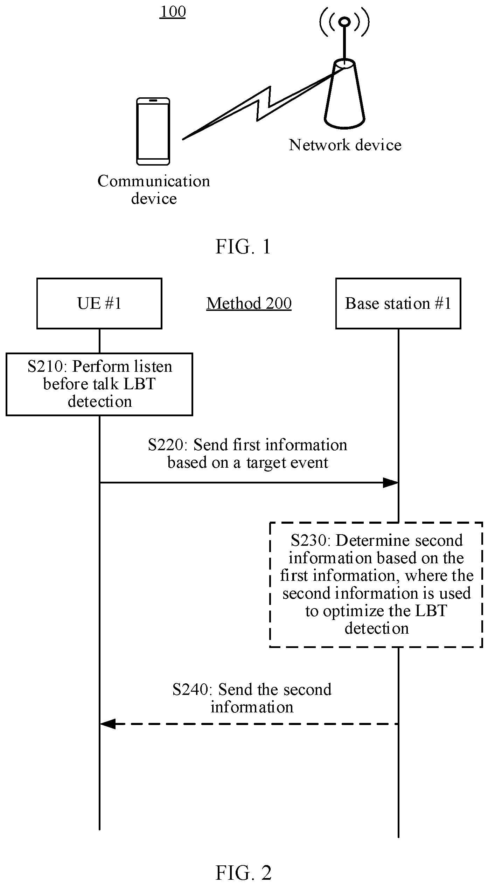

FIG. 1 shows a communication system 100 to which an embodiment of this application is applicable. The communication system 100 includes a communication device and a network device.

The communication device in embodiments of this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in an evolved public land mobile network (Public Land Mobile Network, PLMN), or the like. This is not limited in embodiments of this application.

The network device in embodiments of this application may be a device configured to communicate with the communication device. The network device may be a base transceiver station (Base Transceiver Station, BTS) in the global system of mobile communication (Global System of Mobile communication, GSM) system or the code division multiple access (Code Division Multiple Access, CDMA) system, or may be a NodeB (NodeB, NB) in the wideband code division multiple access (Wideband Code Division Multiple Access, WCDMA) system, or may be an evolved NodeB (Evolved NodeB, eNB, or eNodeB) in the LTE system, or may be a radio controller in a cloud radio access network (Cloud Radio Access Network, CRAN) scenario. Alternatively, the network device may be a relay station, an access point, a vehicle-mounted device, a wearable device, a network device in a 5G network, a network device in an evolved PLMN network, a network device in a future 6G network, or the like. This is not limited in embodiments of this application.

For ease of description, an example in which the communication device is UE and the network device is a base station is used below for description.

FIG. 2 shows a communication method 200 according to this application. The method 200 is applicable to a scenario in which the UE communicates with the base station on an unlicensed frequency band. The method 200 includes the following steps.

S210: UE #1 performs listen before talk (listen before talk, LBT) detection.

Types of LBT detection include a type 1 (type 1) and a type 2 (type 2). The type 2 may be further classified into a type 2A, a type 2B, and a type 2C.

The type 1 LBT detection is applicable to a scenario in which the UE sends a physical uplink shared channel (physical uplink shared channel, PUSCH), a physical uplink control channel (physical uplink control channel, PUCCH), a sounding reference signal (sounding reference signal, SRS), or the like. A procedure of the type 1 LBT detection includes the following main steps:
(1) The UE #1 selects an upper limit (CWp) of a contention window based on a transmission priority of to-be-transmitted data. A correspondence between the transmission priority and CWp is shown in Table 1. CWp that is initially selected is an optional minimum value.

**Table 1**

| Transmission priority | CWmin p | CWmax p | Allowed value of CWp |
|---|---|---|---|
| 1 | 3 | 7 | (3, 7) |
| 2 | 7 | 15 | (7, 15) |
| 3 | 15 | 63 | (15, 31, 63) |
| 4 | 15 | 1023 | (15, 31, 63, 127, 255, 511, 1023) |

(2) The UE #1 selects an initial contention window length (denoted as N) in a uniform random manner. A value of N ranges from 0 to CWp.
(3) When the UE #1 detects that energy in a specified bandwidth is less than a second threshold and lasts for duration T_d, N is decreased by 1; otherwise, a value of N remains unchanged.
(4) When the value of N is decreased to 0 and at least idleness of duration T_d is detected, the UE may perform communication in a corresponding frequency band.

When a type of the LBT detection is the type 2A, if the UE #1 detects that T_short_ul is idle, the UE #1 immediately initiates transmission.

When a type of the LBT detection is the type 2B, the UE performs detection of 7 µs+9 µs. If idleness of 5 µs is detected in total and idleness of 4 µs is detected in last 9 µs, the UE may immediately initiate transmission after the detection ends.

When a type of the LBT detection is the type 2C, the UE can perform transmission without detection, but maximum transmission duration is limited to 584 µs.

S220: The UE #1 sends first information based on a target event. The first information includes detection information of the LBT detection. Correspondingly, a base station #1 receives the first information.

It should be understood that when the target event occurs, the UE #1 may record and send the first information.

In a case, the UE #1 may record the first information in a storage file of the UE #1, for example, a log (log) file.

The target event includes any one of the following:
The LBT detection has a potential risk, a communication process between the UE #1 and the base station #1 has a potential risk, the LBT detection fails, or the communication process between the UE #1 and the base station #1 fails.

It should be understood that the communication process between the UE #1 and the base station #1 is performed based on the LBT detection. On a basis that the LBT detection succeeds, the UE #1 may communicate with the base station #1 on an unlicensed frequency band. The communication process between the UE #1 and the base station #1 includes a data and/or signaling transmission process between the UE #1 and the base station #1.

The first information may further include one or more of the following:
a moment at which the target event occurs, a type of to-be-transmitted data of the UE #1, a data amount of the to-be-transmitted data, and a transmission priority of the to-be-transmitted data.

The following describes several possible cases in which the UE #1 sends the first information and the base station #1 receives the first information.

### Case 1:

The UE #1 accesses a cell #1. The cell #1 is a cell of the base station #1. For the cell #1, details are not described below.

The UE #1 sends the first information to the base station #1. Correspondingly, the base station #1 receives the first information.

Optionally, the UE #1 may send the first information to the base station #1 on an unlicensed frequency band after accessing the cell #1 on the unlicensed frequency band.

Optionally, the UE #1 may send the first information to the base station #1 on a licensed frequency band after accessing the cell #1 on the licensed frequency band.

### Case 2:

The UE #1 no longer accesses a cell of the base station #1, but accesses a cell #2. The cell #2 is a cell of a base station #2. It should be understood that the base station #2 is different from the base station #1.

The UE #1 sends the first information to the base station #2. In this case, the first information further includes an identifier of a cell in which the target event occurs (for example, an identifier of the cell #1).

Further, the base station #2 sends the first information to the base station #1 based on the identifier of the cell #1. Correspondingly, the base station #1 receives the first information.

The UE #1 may access the cell #2 on an unlicensed frequency band or a licensed frequency band. Further, the UE #1 may send the first information to the base station #2 on an unlicensed frequency band or a licensed frequency band.

According to the solution of this application, when the UE detects that the target event occurs, the UE reports the detection information of the LBT detection to the base station. For example, when the LBT detection fails, the UE reports the detection information of the LBT detection to the base station, instead of reporting only an LBT detection failure as a cause to the base station.

Optionally, the method 200 further includes S230 and S240.

S230: The base station #1 determines second information based on the first information, where the second information is used to optimize the LBT detection.

S240: The base station #1 sends the second information to the UE #1. Correspondingly, the UE #1 receives the second information.

It should be understood that the UE #1 may perform subsequent LBT detection based on the second information. Compared with the previous LBT detection, the subsequent LBT detection is optimized to some extent.

According to the solution of this application, the base station may optimize the LBT detection based on the detection information of the LBT detection that is reported by the UE. Therefore, transmission efficiency of the UE on an unlicensed frequency band is improved, and a waiting delay of the UE is reduced.

The following describes the first information and the second information in detail with reference to the four types of target events.

A first type of target event is that the LBT detection has a potential risk.

In this application, that the LBT detection has a potential risk means that although the LBT detection succeeds, there is a possibility of potential failure of the LBT detection. That the LBT detection has a potential risk includes but is not limited to the following cases:

### Case 1:

The UE #1 detects that a quantity of non-idle detection windows is greater than a first threshold during the LBT detection. In this case, the detection information in the first information includes the quantity of non-idle detection windows. The non-idle detection window may also be referred to as a busy detection window. The non-idle detection window may be understood as a detection window in which detected energy is greater than a second threshold. The second threshold is an energy detection threshold for performing the LBT detection. For the second threshold, details are not described below.

The non-idle detection windows may be consecutive non-idle detection windows, or may be inconsecutive non-idle detection windows.

For example, if a quantity of consecutive non-idle detection windows is greater than 20, the LBT detection has a potential risk. Alternatively, if a quantity of inconsecutive non-idle detection windows is greater than 50, the LBT detection has a potential risk.

The base station #1 may determine, based on the detection information, that the quantity of non-idle detection windows detected by the UE #1 during the LBT detection is greater than the first threshold.

### Case 2:

The UE #1 detects that an energy detection result of an idle detection window is close to the second threshold during the LBT detection.

In an example, the UE #1 detects that a proportion (denoted as a proportion #A) of an idle detection window in which a difference between an energy detection result and the second threshold is less than a third threshold is greater than a fourth threshold. In this case, the detection information includes the proportion #A. Optionally, the first information further includes the second threshold.

For example, the second threshold is -85 dBm, the third threshold is 2 dBm, and the fourth threshold is 80%. If a proportion of an idle detection window in which an energy detection result is close to -85 dBm (for example, the energy detection result is -86 dBm) is greater than 80%, the detection information includes the proportion #A. Optionally, the first information further includes the second threshold.

The base station #1 may determine, based on the detection information, that the proportion #A is greater than the fourth threshold.

In another example, the UE #1 detects that a quantity (denoted as a quantity #A) of idle detection windows in which a difference between an energy detection result and the second threshold is less than the third threshold is greater than a threshold #A. In this case, the detection information includes the quantity #A. Optionally, the first information further includes the second threshold.

The base station #1 may determine, based on the detection information, that the quantity #A is greater than the threshold #A.

### Case 3:

The UE #1 detects that a length of a contention window is greater than a threshold #B during the LBT detection. In this case, the detection information includes the length of the contention window.

For example, the threshold #B may be 15 slots.

The base station #1 may determine, based on the detection information, that the length of the contention window is greater than the threshold #B.

### Case 4:

The LBT detection succeeds, but the UE #1 detects that duration of the LBT detection is greater than a threshold #C. In this case, the detection information includes the duration of the LBT detection.

For example, the threshold #C may be 5 seconds.

The base station #1 may determine, based on the detection information, that the duration for performing the LBT detection by the UE #1 is greater than the threshold #C.

### Case 5:

The LBT detection succeeds, but the UE #1 detects that a proportion (denoted as a proportion #B) of idle detection windows in detection windows is less than a threshold #D during the LBT detection. In this case, the detection information includes the proportion #B.

For example, the threshold #D may be 20%.

The base station #1 may determine, based on the detection information, that the proportion #B is less than the threshold #D.

### Case 6:

The UE #1 successfully accesses the cell #1, but before the UE #1 successfully accesses the cell #1, a quantity of times that the UE #1 attempts to access the cell #1 is greater than a fifth threshold.

In an example, when attempting to access the cell #1, the UE #1 receives a lower-layer LBT failure indication.

In another example, the UE #1 attempts to access the cell #1 on a plurality of physical channels of a same bandwidth part (band width part, BWP).

In this case, the detection information includes information about the plurality of physical channels, and one or more of the following:
duration for performing the LBT detection, a proportion of an idle detection window, a proportion of a non-idle detection window, an energy detection result of a detection window, a quantity of low-layer LBT failure indications received by a MAC layer, low-layer LBT failure indication detection time, and a maximum quantity of low-layer LBT failure indications.

The duration for performing the LBT detection may be duration for performing the LBT detection on each of the plurality of physical channels, or may be average duration for performing the LBT detection on the plurality of physical channels, or may be another case. This is not limited.

The quantity of low-layer LBT failure indications received by the MAC layer may be a quantity of low-layer LBT failure indications received on at least one of the plurality of physical channels, or may be a quantity of low-layer LBT failure indications received on the plurality of physical channels, or may be another case. This is not limited in this application. The energy detection result of the detection window may be an energy detection result of each detection window during the LBT detection, or may be an average energy detection result of all detection windows during the LBT detection, or may be another case. This is not limited.

The BWP may be understood as a physical channel range of an unlicensed frequency band that is configured by the base station #1 for the UE #1.

In still another example, the UE #1 attempts to access the cell #1 in a plurality of BWPs. In this case, the detection information includes information about the plurality of BWPs, and one or more of the following:
duration for performing the LBT detection, and a failure indication of the LBT detection.

In this case, the base station may determine, based on the detection information, that the UE #1 successfully accesses the cell #1, but a quantity of times the UE #1 attempts to access the cell #1 is greater than the fifth threshold.

It should be understood that, after the UE #1 successfully performs the LBT detection, the method further includes:
The UE #1 sends data and/or signaling to the base station #1 in a reference period. Correspondingly, the base station #1 receives the data and/or the signaling.

The base station #1 sends negative acknowledgment (non-acknowledge, NACK) information and/or acknowledgment (acknowledge, ACK) information of the data and/or the signaling to the UE #1 in the reference period. Correspondingly, the UE #1 receives the NACK information and/or the ACK information in the reference period.

A meaning of the reference period is the first slot (slot) that includes a physical uplink shared channel (physical uplink shared channel, PUSCH) and that is transmitted by the terminal on an unlicensed frequency band.

A second type of target event is that the communication process between the UE #1 and the base station #1 has a potential risk.

In this application, that the communication process between the UE #1 and the base station #1 has a potential risk means that the UE #1 and the base station #1 can communicate with each other, but there is a possibility of potential failure in the communication process between the UE #1 and the base station #1.

In an example, when the UE #1 detects any one of the following, the communication process between the UE #1 and the base station #1 has a potential risk:
A proportion of NACK information in a reference period is greater than a sixth threshold, a proportion of ACK information in the reference period is less than a seventh threshold, and a quantity of retransmissions of data and/or signaling in the reference period is greater than an eighth threshold.

For example, the sixth threshold may be 80%, the seventh threshold may be 20%, the eighth threshold may be 8 times, and a quantity threshold of low-layer LBT failure indications may be 30 times.

In this case, the first information further includes any one of the following:
the proportion of the NACK information in the reference period, the proportion of the ACK information in the reference period, the quantity of retransmissions of the data or the signaling in the reference period, a quantity of low-layer LBT failure indications received by the MAC layer, low-layer LBT failure indication detection time, and a maximum quantity of low-layer LBT failure indications. The low-layer LBT failure indication detection time (lbt-FailureDetectionTimer) and the maximum quantity of low-layer LBT failure indications (lbt-FailureInstanceMaxCount) may be carried in LBT failure recovery configuration information (LBT-FailureRecoveryConfig). For example, when the quantity of low-layer LBT failure indications received by the MAC layer exceeds the maximum quantity of low-layer LBT failure indications, it is determined that transmission cannot be performed on a current grant-free channel currently because of an LBT failure.

It should be understood that the base station #1 may also determine, based on the first information, that the communication process between the UE #1 and the base station #1 has a potential risk.

A third type of target event is that the LBT detection fails.

### Case 1:

When the UE #1 cannot access the cell #1 on an unlicensed frequency band, the LBT detection of the UE #1 fails. It should be understood that the base station #1 may also learn that the UE #1 cannot access the cell #1 on the unlicensed frequency band.

In this case, the detection information includes one or more of the following:
a quantity of attempts to access the cell #1, a proportion of an idle detection window, a proportion of a non-idle detection window, an energy detection result of a detection window, duration for performing the LBT detection, a second threshold, and a quantity of backoff times.

The quantity of attempts to access the cell #1 may be a quantity of times that the UE #1 attempts to access the cell #1 on each channel, or may be an average quantity of times that the UE #1 attempts to access the cell #1 on a plurality of channels, or certainly, may be another case. This is not limited. The quantity of backoff times may be a quantity of times that a length of a contention window is increased. It should be understood that if the proportion of NACK information in the reference period reaches a specific proportion (for example, reaches 90%), a length of a contention window is increased.

In an example, if a quantity of channels on which the UE #1 attempts to access the cell #1 on an unlicensed frequency band is greater than or equal to a threshold #E, the UE #1 cannot access the cell #1 on the unlicensed frequency band. In this case, the detection information may further include information about a channel on which the UE #1 attempts.

In another example, if the UE #1 cannot access the cell #1 on all channels on an unlicensed frequency band, the UE #1 cannot access the cell #1 on the unlicensed frequency band.

In still another example, if a quantity of times that the UE #1 attempts to access the cell #1 on an unlicensed frequency band is greater than or equal to a threshold #F, the UE #1 cannot access the cell #1 on the unlicensed frequency band.

### Case 2:

The UE #1 successfully accesses the cell #1 on a first channel, but the UE #1 cannot communicate with the base station #1 through the first channel. In this case, the LBT detection of the UE #1 fails. It should be understood that the base station #1 may also learn that the UE #1 successfully accesses the cell #1, but cannot communicate with the base station #1 through the first channel.

In this case, the detection information includes one or more of the following:
a quantity of times that the UE #1 attempts to communicate with the base station #1 through the first channel, a proportion of an idle detection window, a proportion of a non-idle detection window, an energy detection result of a detection window, duration for performing the LBT detection, a second threshold, and a quantity of backoff times.

For example, the UE #1 successfully accesses the cell #1 on the first channel, but the UE #1 cannot occupy the first channel because the LBT detection continuously fails. As a result, the UE #1 cannot communicate with the base station #1 through the first channel.

A fourth type of target event is that the communication process between the UE #1 and the base station #1 fails.

In an example, when the UE #1 detects any one of the following, the communication process between the UE #1 and the base station #1 fails:

A proportion of NACK information in a reference period is greater than a ninth threshold, a proportion of ACK information in the reference period is less than a tenth threshold, and a quantity of retransmissions of data and/or signaling in the reference period is greater than an eleventh threshold.

It should be understood that the ninth threshold is greater than the sixth threshold above, the tenth threshold is less than the seventh threshold above, and the eleventh threshold is greater than the eighth threshold above.

For example, the ninth threshold is 90%, the tenth threshold is 10%, and the eleventh threshold is 9 times.

In this case, the detection information includes one or more of the following:
a quantity of times of performing the LBT detection, a proportion of an idle detection window, a proportion of a non-idle detection window, an energy detection result of a detection window, duration for performing the LBT detection, a second threshold, and a quantity of backoff times.

In addition, in addition to the four types of target events, optionally, the base station #1 may further configure the UE #1 to report the first information through SHR. For example, when a timer such as T310, T312, or T304 expires on an unlicensed frequency band, the UE #1 records the first information, and reports the first information through SHR.

Optionally, when any one of the following cases occurs, the base station #1 may determine the second information based on the first information, where the second information is used to increase the second threshold:
one or more of Case 1 to Case 5 of the first type of target event, and the third type of target event.

In an example, the second information may include a threshold #G, the threshold #G is greater than the second threshold, and the second information indicates to perform the LBT detection by using the threshold #G. It should be understood that the threshold #G is an energy detection threshold.

In another example, the second information indicates to increase the second threshold. The UE #1 determines an energy detection threshold for subsequent LBT detection based on the second information.

For example, when any one of Case 1 to Case 5 of the first type of target event occurs, if an amount of to-be-transmitted data of the UE #1 is less than a threshold #H, and/or a transmission priority of the to-be-transmitted data of the UE #1 is greater than a threshold #I, the base station #1 may send the second information to the UE #1, to increase an energy detection threshold for performing LBT detection by the UE #1.

According to the solution of this application, if a priority of to-be-transmitted data is high or a data amount of the to-be-transmitted data is small, an energy detection threshold for LBT detection may be increased, so that the UE #1 preferentially preempts a channel, to increase a data transmission rate and reduce a transmission delay.

Optionally, when any one of the following cases occurs, the base station #1 may determine the second information based on the first information, where the second information includes a second channel, and the second information indicates to perform the LBT detection on the second channel:
one or more of Case 1 to Case 6 of the first type of target event, and the second type of target event.

A quantity of times that the target event occurs on the second channel is less than a twelfth threshold.

For example, when any one of Case 1 to Case 6 of the first type of target event occurs, if an amount of to-be-transmitted data of the UE #1 is large, for example, is greater than a threshold #J, the base station #1 may send the second information to the UE #1, so that the UE #1 performs the LBT detection on the second channel, and performs data transmission with the base station #1 on the second channel.

It should be understood that, when the amount of the to-be-transmitted data is large, the UE #1 needs to perform transmission on a proper channel for a long period of time. Therefore, according to the solution of this application, the base station #1 may indicate, to the UE #1, the second channel on which the target event occurs less frequently. This facilitates subsequent data transmission of the UE #1.

Optionally, when Case 2 of the third type of target event occurs, the base station #1 may determine the second information based on the first information. The second information is used to increase a transmission priority (denoted as a first priority) of the to-be-transmitted data.

In an example, the second information may include a second priority, the second priority is higher than the first priority, and the second information indicates to perform the LBT detection by using the second priority.

In another example, the second information indicates to increase the first priority. The UE #1 determines the transmission priority of the to-be-transmitted data based on the second information.

The base station #1 may send the second information to the UE #1. Correspondingly, the UE #1 receives the second information. Further, the UE #1 performs subsequent LBT detection by using the second priority.

Optionally, when the fourth type of target event occurs, the base station #1 may determine the second information based on the first information. The second information is used to decrease the second threshold, or the second information is used to decrease the priority of the to-be-transmitted data.

In an example, the second information may include a threshold #K, the threshold #K is less than the second threshold, and the second information indicates to perform the LBT detection by using the threshold #K. It should be understood that the threshold #K is an energy detection threshold.

In another example, the second information indicates to decrease the second threshold.

In still another example, the second information may include a third priority, the third priority is lower than the first priority, and the second information indicates to perform the LBT detection by using the third priority.

In yet another example, the second information indicates to decrease the first priority.

The base station #1 may send the second information to the UE #1. Correspondingly, the UE #1 receives the second information. Further, the UE #1 performs subsequent LBT detection by using the threshold #K, or performs subsequent LBT detection by using the third priority.

According to the solution of this application, when the fourth type of target event occurs, the second information sent by the base station #1 to the UE #1 is used to decrease the second threshold or decrease the priority of the to-be-transmitted data. When the UE #1 performs subsequent LBT detection, a condition for successful LBT detection becomes more stringent. If the LBT detection still succeeds under the more stringent condition, an occurrence probability of the target event becomes lower when the UE #1 subsequently communicates with the base station #1.

Optionally, when any one of the four types of target events occurs, the method 200 further includes S250 and S260.

S250: The base station #1 determines third information based on the first information, where the third information indicates to communicate with the base station #1 on a licensed frequency band.

S260: The base station #1 sends the third information.

In a case, the base station #1 may send the third information to a part of UEs in the cell #1. The part of UEs are UEs whose priorities of to-be-transmitted data are greater than a threshold #L. The part of UEs may include the UE #1, or may not include the UE #1. This is not limited. Correspondingly, the part of UEs communicate with the base station #1 on the licensed frequency band based on the third information.

In addition, before S210, the method 200 further includes S201.

S201: The base station #1 sends fourth information to the UE #1. Correspondingly, the UE #1 receives the fourth information from the base station #1.

The fourth information includes LBT configuration information and determining conditions of whether the four types of target events occur.

The LBT configuration information includes information such as the second threshold and LBT failure recovery configuration. For details, refer to an existing protocol.

In an example, the determining condition may be the first threshold, the third threshold, the fourth threshold, the fifth threshold, and the like in the foregoing, and are not listed one by one herein.

Optionally, corresponding to Case 1 in S220, before S220, the method 200 further includes S211 and S212.

S211: The UE #1 sends information #A to the base station #1, where the information #A indicates that the target event occurs and the UE #1 records the first information. Correspondingly, the base station #1 receives the information #A.

S212: The base station #1 sends information #B to the UE #1, where the information #B indicates the UE #1 to report the recorded first information.

Optionally, corresponding to Case 2 in S220, before S220, the method 200 further includes S213 and S214.

S213: The UE #1 sends information #A to the base station #2, where the information #A indicates that the target event occurs and the UE #1 records the first information. Correspondingly, the base station #2 receives the information #A.

S214: The base station #2 sends information #B to the UE #1, where the information #B indicates the UE #1 to report the recorded first information.

According to the method 200, when the target event occurs, the base station may optimize the LBT detection, to improve a success rate of communication between the UE and the base station on an unlicensed frequency band. In addition, when the target event occurs, the base station may configure the UE to perform communication on a licensed frequency band. Therefore, according to the method 200 in this application, a probability of a communication failure between the UE and the base station can be effectively reduced, a communication effect can be improved, transmission efficiency can be improved, and a waiting delay of the UE can be reduced.

The method 200 is mainly used for communication performed by the UE on an unlicensed frequency band, to prevent a communication failure between the UE and the base station caused by occurrence of the target event, to improve a communication effect. The following method 300 and method 400 are mainly for communication performed by the UE in a multi-connectivity (multi-radio multi-connectivity, MR-MC) scenario, to prevent a communication failure between the UE and the base station due to a connection failure, so as to improve a communication effect.

In the multi-connectivity scenario, the UE may be simultaneously connected to at least two base stations. One is a master node (master node, MN), and others are secondary nodes (secondary nodes, SNs). A dual connectivity (dual connectivity, DC) scenario is used as an example. In the DC scenario, handover of a secondary node may be supported. The handover of the secondary node may be triggered by the MN or a source SN connected to the UE, so that the UE is handed over from the source SN to a target SN.

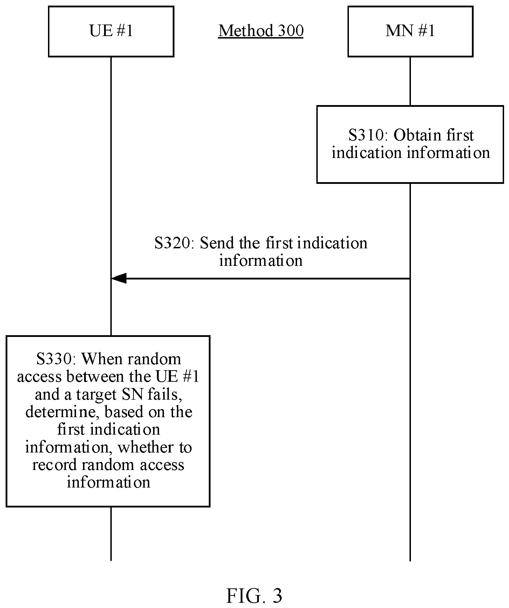

FIG. 3 shows a communication method 300 according to this application. The method 300 is applicable to the multi-connectivity scenario. The method 300 includes the following steps.

S310: An MN #1 obtains first indication information, where the first indication information indicates whether UE #1 records random access information (denoted as random access information #A) between the UE #1 and a target SN when random access between the UE #1 and the target SN fails.

The following describes a manner in which the MN #1 obtains the first indication information.

### Manner 1:

The MN #1 locally generates the first indication information. Specifically, the MN #1 may locally determine whether the UE #1 records the random access information #A when the random access between the UE #1 and the target SN fails. Further, the MN #1 generates the first indication information.

In a first possible case, the MN #1 may determine, based on a storage capability of the UE #1, whether the UE #1 records the random access information #A.

For example, when the storage capability of the UE #1 is lower than a threshold #M, the MN #1 determines that the UE #1 does not record the random access information #A.

In a second possible case, the MN #1 may determine, based on an air interface transmission capability between the UE #1 and the MN #1, whether the UE #1 records the random access information #A.

For example, when the air interface transmission capability between the UE #1 and the MN #1 is lower than a threshold #N, the MN #1 determines that the UE #1 does not record the random access information #A.

In a third possible case, the MN #1 may determine, based on a quantity of terminals that fail to perform random access to the target SN, whether the UE #1 records the random access information #A.

For example, when the quantity of terminals that fail to perform random access to the target SN is greater than a threshold #P, the MN #1 determines that the UE #1 records the random access information #A.

### Manner 2:

The MN #1 obtains the first indication information from the target SN. That is, the target SN may determine whether the UE #1 records the random access information #A. Further, the target SN sends the first indication information to the MN #1.

S320: The MN #1 sends the first indication information to the UE #1. Correspondingly, the UE #1 receives the first indication information.

S330: When the random access between the UE #1 and the target SN fails, the UE #1 determines, based on the first indication information, whether to record the random access information #A.

It should be understood that when the random access between the UE #1 and the target SN fails, the UE #1 records failure information. The failure information includes secondary cell group failure information and/or a secondary cell group failure report.

Further, the UE #1 determines, based on the first indication information, whether to record the random access information #A in the failure information.

That is, when the first indication information indicates to record the random access information #A, the failure information includes the random access information #A. When the first indication information indicates not to record the random access information #A, the failure information does not include the random access information #A.

The random access information #A may include a part or all of information in random access common information (ra-InformationCommon).

The random access information includes a large amount of content, and occupies a large quantity signaling bits. Therefore, according to the solution of this application, the UE #1 may determine, based on the first indication information, whether to record the random access information. When the UE #1 does not need to record the random access information, storage space of the UE #1 can be saved, and less signaling is wasted.

In addition, the method 300 further includes:
S340: The UE #1 sends the failure information.

The following describes several optional manners in which the UE #1 sends the failure information.

### Manner 1:

The UE #1 sends the failure information to the MN #1. Correspondingly, the MN #1 receives the failure information.

### Manner 2:

The UE #1 sends the first failure information to a base station #3. Correspondingly, the base station #3 receives the failure information. It should be understood that the base station #3 is different from the MN #1. In other words, the UE #1 no longer accesses the MN #1, but accesses the base station #3.

Optionally, when S340 is performed in Manner 1, the method further includes S350.

S350: The MN #1 sends the random access information #A or the failure information to the target SN.

That is, when the MN #1 determines that the failure information includes the random access information #A between the UE #1 and the target SN, the MN #1 sends the random access information #A or the failure information to the target SN.

In addition, optionally, the MN #1 may further send one or more of the following information to the target SN:
identification information of the UE #1, information about time at which the random access between the UE #1 and the target SN fails, and configuration information of the random access between the UE #1 and the target SN.

The identification information of the UE #1 may be any one of the following:
an identifier (for example, an SeNB UE X2AP ID or an S-NG-RAN node UE XnAP ID) that is allocated by the target SN to the UE #1 and that is used to identify the UE #1 on an interface between the base stations, an identifier (for example, an M-NG-RAN node UE XnAP ID or an MeNB UE X2AP ID) that is allocated by the MN #1 to the UE #1 and that is used to identify the UE #1 on an interface between the base stations, a cell radio network temporary identifier (cell radio network temporary identifier, C-RNTI) allocated by the MN #1, identity information of a primary cell allocated by the MN #1, and identity information of a secondary cell allocated by the NM #1.

Identification information of a cell may be any one of the following:
a cell global identifier (cell global identifier, CGI), a physical cell identifier (physical cell identifier, PCI), a frequency, a cell identifier (cell identifier, cell ID), a non-public network identifier (non-public network identifier, NPN ID), and a non-terrestrial network identifier (non-terrestrial network identifier, NTN ID). It should be understood that the identification information of the cell may also be another cell identifier. The CGI may include a public land mobile network (public land mobile network, PLMN ID) and a cell ID.

The identification information of the cell is not described below.

Optionally, when S340 is performed in Manner 1, the method further includes S360 and S370.

S360: The MN #1 sends the failure information to a source SN.

Further, when the source SN determines that the failure information includes the random access information #A between the UE #1 and the target SN, the source SN sends the random access information #A or the first failure information to the target SN.

Optionally, when S340 is performed in Manner 2, the method further includes S370.

S370: The base station #3 sends the failure information to the MN #1. Correspondingly, the MN #1 obtains the failure information.

Further, a subsequent operation may be performed according to the description in S350 or S360. For brevity, details are not described herein again.

Optionally, when S340 is performed in Manner 2, the method further includes S380.

S380: The base station #3 sends the failure information to the source SN. Correspondingly, the source SN obtains the failure information.

Further, when the source SN determines that the failure information includes the random access information #A between the UE #1 and the target SN, the source SN sends the random access information #A or the failure information to the target SN.

According to the method 300, the UE may determine, based on the first indication information, whether the random access information between the UE and the target SN needs to be recorded when the random access between the UE and the target SN fails, so that storage space of the UE is reduced when the UE does not record the random access information, to reduce a signaling waste. In addition, if the UE records the random access information, the target SN may obtain the random access information, and the target SN may optimize a random access procedure of the UE based on the random access information, to improve a communication effect.

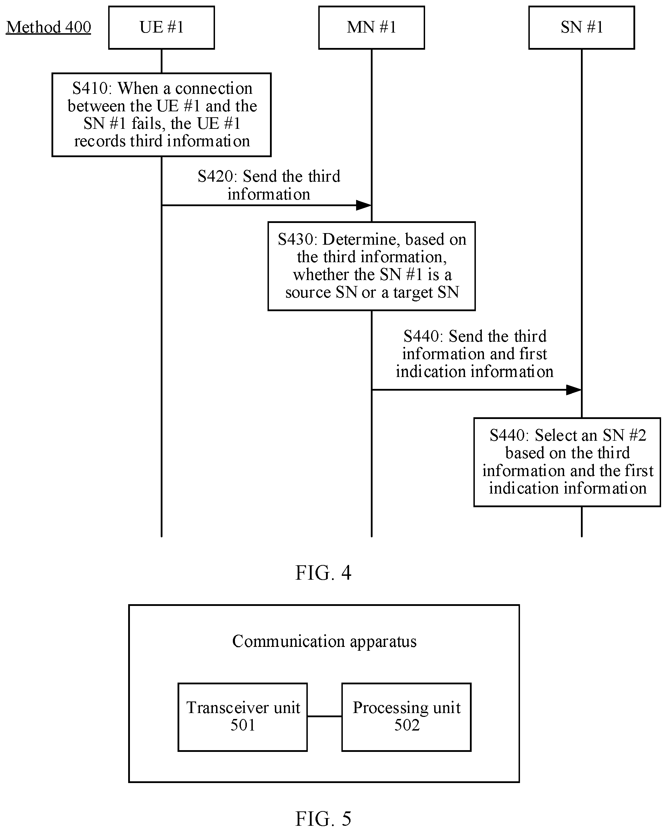

FIG. 4 shows a communication method 400 according to this application. The method 400 is applicable to a scenario in which UE performs SN handover in a multi-connectivity case, that is, a scenario in which the UE performs handover from a source SN to a target SN. The method 400 includes the following steps.

S410: When a connection between UE #1 and an SN #1 fails, the UE #1 records third information.

The third information includes measurement information of a cell, and the measurement information of the cell includes identifier information of the cell and quality information of the cell.

The quality information of the cell includes but is not limited to one or more of the following:
received signal code power (received signal code power, RSCP), reference signal received power (reference signal received power, RSRP), reference signal received quality (reference signal received quality, RSRQ), a signal-to-noise ratio (signal noise ratio, SNR), a signal to interference plus noise ratio (signal to interference plus noise ratio, SINR), and a reference signal strength indicator (reference signal strength indication, RSSI).

It should be understood that a level of the quality information of the cell may be one or more of the following:
a cell level, a beam level, a synchronization signal/physical broadcast channel block (synchronization signal/physical broadcast channel block, SS/PBCH Block) level, a channel state information reference signal (channel-state information reference signal, CSI-RS) level, a numerology (numerology) level, a slicing (slicing) level, and a BWP level.

The UE #1 may obtain the quality information of the cell by measuring one or more of the following signals:
a downlink synchronization channel, a channel state information reference signal, a demodulation reference signal (demodulation reference signal, DMRS), a cell-specific reference signal (cell-specific reference signal, CRS), a synchronization signal block (synchronization signal block, SSB), and a synchronization signal/physical broadcast channel block.

Optionally, the third information further includes one or more of the following:
information about a primary cell #1 and a secondary cell #1 in which the connection failure occurs, information about a primary cell #2 and a secondary cell #2 before the connection failure occurs, and duration information, where the primary cell #1 is a cell of an MN #1, and it should be understood that the primary cell #2 may be the same as the primary cell #1.

The duration information is duration between a moment at which the UE #1 is handed over to the primary cell #2 and the secondary cell #2 to a moment at which the connection fails.

S420: The UE #1 sends the third information. Correspondingly, the MN #1 obtains the third information.

The following describes possible manners in which the UE #1 sends the third information and the MN #1 obtains the third information.

### Manner 1:

The UE #1 sends the third information to the MN #1. Correspondingly, the MN #1 obtains the third information from the UE #1.

### Manner 2:

The UE #1 sends the third information to a base station #4. Further, the base station #4 sends the third information to the MN #1. Correspondingly, the MN #1 obtains the third information from the base station #4.

The base station #4 is different from the MN #1. The base station #4 is not described below.

### Manner 3:

The UE #1 sends the third information to a base station #4. Further, the base station #4 sends the third information to a core network device. The core network device sends the third information to the MN #1.

For example, the core network device may be a core network device that manages the MN #1 and the base station #4.

S430: The MN #1 determines, based on the third information, whether the SN #1 is a source SN or a target SN.

In a case, if signal quality of a target secondary cell of the target SN reaches a handover threshold for performing SN handover, signal quality of a source secondary cell of the source SN is poor, and the source SN initiates SN handover in a timely manner, but the UE #1 fails to be connected to the target secondary cell, the MN #1 determines the SN #1 as the target SN. That is, a connection between the UE #1 and the target SN fails in S410.

The connection failure of the UE #1 in the target secondary cell may include an SN handover failure or a radio link failure, and certainly may further include another case.

In another case, if signal quality of a target secondary cell corresponding to the target SN reaches a handover threshold for performing SN handover, signal quality of a source secondary cell corresponding to the source SN is poor, and the source SN does not initiate SN handover in a timely manner, the MN #1 determines the SN #1 as the source SN. That is, a connection between the UE #1 and the source SN fails in S410.

The MN #1 may determine, based on the duration information and information about a source/target secondary cell, whether the SN #1 is the source SN or the target SN. It should be understood that the duration information and the information about the source/target secondary cell may also be recorded by the MN #1.

S440: The MN #1 sends the third information and second indication information to the SN#1.

The second indication information indicates whether there is a direct communication interface between the MN #1 and a base station to which the cell whose measurement information is included in the third information belongs.

For example, the direct communication interface includes an X2 interface or an Xn interface.

The following describes several possible bit formats of the second indication information.

### Example 1:

A quantity of bits included in the second indication information is the same as a quantity of cells in the cell measurement information.

For example, if the third information includes two cells (denoted as a cell #A and a cell #B), the second indication information includes two bits (denoted as a bit #A and a bit #B). The bit #A corresponds to the cell #A, and the bit #B corresponds to the cell #B. The bit #A indicates whether there is a direct communication interface between a base station to which the cell #A belongs and the MN #1. The bit #B indicates whether there is a direct communication interface between a base station to which the cell #B belongs and the MN #1.

### Example 2:

A quantity of bits included in the second indication information is greater than a quantity of cells in the cell measurement information.

For example, if the third information includes two cells (denoted as a cell #A and a cell #B), the second indication information includes three bits (denoted as a bit #A, a bit #B, and a bit #C). The bit #A corresponds to the cell #A, and the bit #B corresponds to the cell #B. The bit #A indicates whether there is a direct communication interface between a base station to which the cell #A belongs and the MN #1. The bit #B indicates whether there is a direct communication interface between a base station to which the cell #B belongs and the MN #1. The redundant bit #C in the second indication information has no indication function.

A bit string sequence including the three bits may be (bit #A, bit #B, bit #C), or may be (bit #C, bit #B, bit #A). It should be understood that the bit string sequence may also be another bit string sequence, which is not listed one by one herein.

S450: The SN #1 selects an SN #2 based on the third information and the second indication information. There is a direct communication interface between the SN #2 and the MN #1.

The SN #2 may be used as a target SN for subsequent SN handover.

When UE performs SN handover, if there is no direct communication interface between a target SN and an MN, the SN handover may fail. According to the solution of this application, a first SN may determine, based on the third information and the second indication information, a second SN that has a direct communication interface to the MN, to improve a success rate of subsequent SN handover performed by the UE.

In addition, the method 300 is specific to a random access process between the UE and the target SN in a multi-connectivity scenario, and the method 400 is specific to a connection process between the UE and an SN in the multi-connectivity scenario. It should be understood that if the SN #1 in the method 400 is the target SN, the method 300 and the method 400 may be combined. That is, the method 300 and the method 400 are not isolated from each other.

In an example, in the method 300, the UE #1 receives the first indication information. The first indication information indicates whether the UE #1 records random access information between the UE #1 and the target SN when the random access between the UE #1 and the target SN fails. If the random access between the UE #1 and the target SN succeeds, and a connection between the UE #1 and the target SN then fails, the method 400 may continue to be performed.

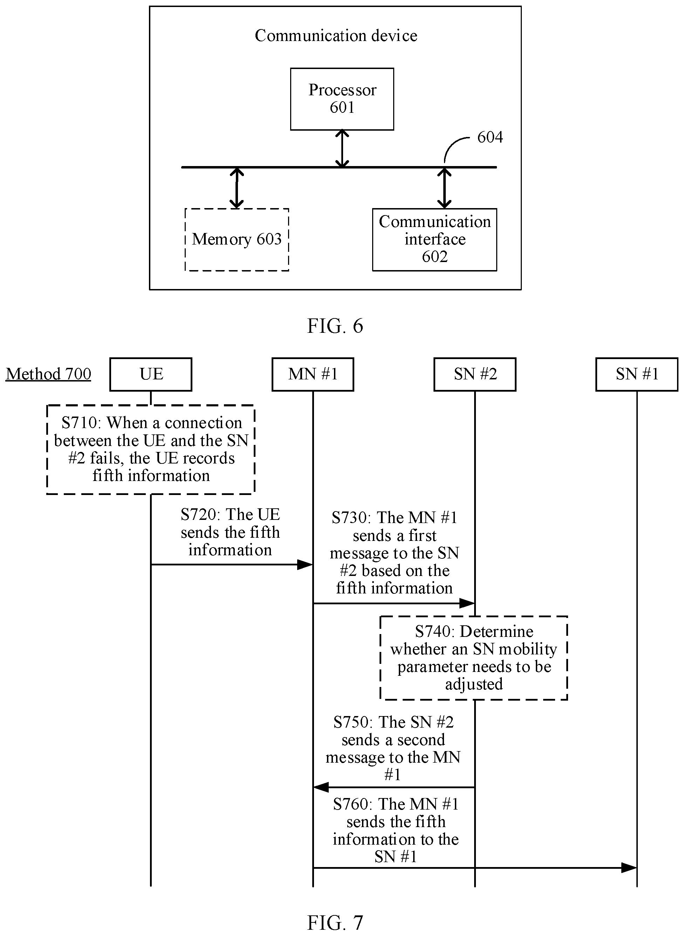

FIG. 7 shows a communication method 700 according to this application. The method 700 is applicable to a scenario in which UE performs SN handover in a multi-connectivity case, that is, a scenario in which the UE performs handover from a source SN (for example, an SN #1) to a target SN (for example, an SN #2). The embodiment shown in FIG. 7 mainly relates to determining, by an MN, whether to adjust an SN mobility parameter. Considering that in some scenarios, the MN may not be able to determine whether a primary secondary cell (primary secondary cell, PSCell) has changed in the SN#2, this embodiment mainly describes determining, by the SN #2, whether an SN mobility parameter needs to be adjusted. The method 700 includes the following steps.

S710: When a connection between the UE and the SN #2 fails, the UE records fifth information.

The fifth information may include measurement information of a cell. For description of the measurement information of the cell, refer to the description in S410. For example, the measurement information of the cell includes identification information of the cell and/or quality information of the cell. Details are not described herein again. It may be understood that, in this embodiment of the present invention, S710 is an optional step.

S720: The UE sends the fifth information. For example, the UE sends the fifth information to an MN #1. Correspondingly, the MN #1 receives the fifth information.

For a manner in which the UE sends the fifth information to the MN #1, refer to the description in S420. Details are not described herein again.

S730: The MN #1 sends a first message to the SN #2 based on the fifth information.

The following lists several possible implementations.

Implementation 1: The first message indicates the SN #2 to feed back, to the MN #1, information about an SN that needs to adjust an SN mobility parameter; or the first message indicates the SN #2 to feed back, to the MN #1, whether the SN #1 needs to adjust an SN mobility parameter; or the first message indicates whether the MN #1 needs to send the fifth information to the SN #1.

Implementation 2: The first message includes feedback indication information, and the feedback indication information indicates the SN #2 to feed back, to the MN #1, information about an SN that needs to adjust an SN mobility parameter; or the feedback indication information indicates the SN #2 to feed back, to the MN #1, whether the SN #1 needs to adjust an SN mobility parameter; or the feedback indication information indicates whether the MN #1 needs to send the fifth information to the SN #1.

Optionally, the first message may carry the fifth information.

S740: The SN #2 determines information about an SN that needs to adjust an SN mobility parameter. This step may be based on at least one or more of the following conditions: the fifth information, access time information of the UE on the SN #2, and whether to send an intra-SN (intra-SN2) primary secondary cell change. A person skilled in the art may understand that S740 is an optional step. In a possible implementation, the SN #2 may record the access time information of the UE on the SN #2.

For example, the following describes several scenarios in which the SN #2 determines that the SN #1 or the SN #2 needs to adjust an SN mobility parameter.

Scenario 1: If the access time information of the UE on the SN #2 is greater than or equal to a time threshold, it may be determined that the SN #2 is an SN that needs to adjust an SN mobility parameter.

Scenario 2: If the access time information of the UE on the SN #2 is less than or equal to a time threshold, quality of all cells served by the SN #2 in the cell measurement information indicated by the fifth information is less than or equal to a quality threshold #1, and there is no intra-SN #2 primary secondary cell change, the SN #2 may determine that the SN #1 is an SN that needs to adjust an SN mobility parameter.

Scenario 3: If the access time information of the UE on the SN #2 is less than or equal to a time threshold, quality of all cells served by the SN #2 in the cell measurement information indicated by the fifth information is less than or equal to a quality threshold #1, and there is an intra-SN #2 primary secondary cell change, it may be determined that the SN #2 is an SN that needs to adjust an SN mobility parameter.

For example, it may be determined that the SN #2 is an SN that needs to adjust an SN mobility parameter. For example, the connection between the UE and the SN #2 fails because the SN #2 does not trigger an inter-SN primary secondary cell change in a timely manner, that is, the primary secondary cell of the UE is not changed to a cell served by another proper SN node in a timely manner.

For another example, the SN #2 may determine that the SN #1 is an SN that needs to adjust an SN mobility related parameter. For example, the connection between the UE and the SN #2 fails because the SN #1 does not select a proper target SN for the UE, but incorrectly selects the SN #2. Consequently, the connection between the UE and the SN #2 fails.

Scenario 4: If the access time information of the UE on the SN #2 is less than or equal to a time threshold, quality of at least one cell served by the SN #2 in the cell measurement information indicated by the fifth information is greater than or equal to a quality threshold #1, and there is no intra-SN #2 primary secondary cell change, it may be determined that the SN #2 is an SN that needs to adjust an SN mobility parameter SN #2.

For example, the connection between the UE and the SN #2 fails because the SN #2 does not select a proper primary secondary cell for the UE, or the SN #2 does not trigger an intra-SN2 primary secondary cell change in a timely manner, or the SN #2 does not trigger an inter-SN primary secondary cell change in a timely manner, that is, the primary secondary cell of the UE is not changed to a cell served by another proper SN node in a timely manner, that is, the primary secondary cell of the UE is not changed to a proper cell in a timely manner. It may be determined that the SN #2 is an SN that needs to adjust an SN mobility parameter SN #2.

For another example, the SN #2 may determine that the SN #1 is an SN that needs to adjust an SN mobility parameter.

Scenario 5: If the access time information of the UE on the SN #2 is less than or equal to a time threshold, quality of at least one cell served by the SN #2 in the cell measurement information indicated by the fifth information is greater than or equal to a quality threshold #1, and there is an intra-SN #2 primary secondary cell change, it may be determined that the SN #2 is an SN that needs to adjust an SN mobility parameter SN #2.

For example, the SN #2 triggers an intra-SN2 primary secondary cell change but does not change the primary secondary cell of the UE to a proper cell; or SN #2 does not trigger an inter-SN primary secondary cell change in a timely manner, that is, does not change the primary secondary cell of the UE to a cell served by another proper SN node in a timely manner.

S750: The SN #2 sends a second message to the MN #1, for example, to respond to the first message. The second message indicates whether the SN #2 needs to adjust an SN mobility parameter, whether the SN #1 needs to adjust an SN mobility parameter, or whether the MN #1 needs to send the fifth information to the SN #1.

Correspondingly, the MN #1 receives the second message from the SN #2.

Optionally, in an implementation, if the SN #2 determines that the SN #1 does not need to adjust the SN mobility parameter, the SN #2 may not perform step 750. That is, if the MN #1 does not receive the second message, and the MN #1 determines that the SN #2 needs to adjust the SN mobility parameter, the MN #1 does not perform subsequent step 760.

S760: The MN #1 sends the fifth information to the SN #1. In this embodiment of the present invention, S760 is an optional step.

It may be understood that the MN #1 determines, based on the second message, whether to send the fifth information to the SN #1. If the MN #1 determines, based on the response message, that the SN #1 needs to adjust the SN mobility parameter, or determines that the fifth information needs to be sent to the SN #1, the MN #1 performs S760.

In this embodiment, the SN #2 may determine whether the SN mobility parameter needs to be adjusted, to ensure a success rate of subsequent SN mobility. Further, the MN #1 may determine, based on the feedback information of the SN #2, whether to send the fifth information to the SN #1, to ensure that the MN #1 sends the fifth information to a node that needs to adjust an SN mobility parameter, so that a corresponding node can also optimize the SN mobility parameter.

According to the foregoing methods, FIG. 5 shows a communication apparatus according to an embodiment of this application. The communication apparatus includes a transceiver unit 501 and a processing unit 502.

The transceiver unit 501 may be configured to implement a corresponding communication function. The transceiver unit 501 may also be referred to as a communication interface or a communication unit. The processing unit 502 may be configured to perform a processing operation.

Optionally, the apparatus further includes a storage unit. The storage unit may be configured to store instructions and/or data. The processing unit 502 may read the instructions and/or the data in the storage unit, so that the apparatus implements actions of the apparatus in the foregoing method embodiments.

In a first design, the apparatus may be the communication device in the foregoing embodiments, or may be a component (for example, a chip) of the communication device.

The processing unit is configured to perform listen before talk LBT detection. First information includes detection information of the LBT detection. The transceiver unit is configured to send the first information based on a target event.

In a case, the transceiver unit is further configured to send data and/or signaling to a network device in a reference period. The transceiver unit is further configured to receive negative acknowledgment NACK information or acknowledgment ACK information of the data and/or the signaling from the network device in the reference period.

In a case, the transceiver unit is further configured to receive second information.

Optionally, the second information is used to increase a second threshold.

Optionally, the second information includes a second channel, the second information indicates to perform the LBT detection on the second channel, and a quantity of times that the target event occurs on the second channel is less than a twelfth threshold.

Optionally, the second information is used to increase a transmission priority of to-be-transmitted data.

Optionally, the second information is used to decrease the second threshold, or the second information is used to decrease the transmission priority of the to-be-transmitted data.

In a case, the transceiver unit is further configured to receive third information. The third information indicates to perform communication on a licensed frequency band.

In a second design, the apparatus may be the network device in the foregoing embodiments, or may be a component (for example, a chip) of the network device.

The transceiver unit is configured to receive first information. The first information includes detection information of listen before talk LBT detection.

In a case, the processing unit is configured to determine second information based on the first information. The second information is used to optimize the LBT detection. The transceiver unit is further configured to send the second information.

In a case, the transceiver unit is further configured to receive data and/or signaling from a communication device in a reference period. The transceiver unit is further configured to send negative acknowledgment NACK information or acknowledgment ACK information of the data and/or the signaling to the communication device in the reference period.

In a case, the processing unit is configured to determine third information based on the first information. The third information indicates to perform communication on a licensed frequency band. The transceiver unit is further configured to send the third information.

In a third design, the apparatus may be the communication device in the foregoing embodiments, or may be a component (for example, a chip) of the communication device.

The transceiver unit is configured to obtain first indication information. The first indication information indicates whether the communication device records random access information between the communication device and a target secondary node SN when random access between the communication device and the target SN fails. When the random access between the communication device and the target SN fails, the processing unit is configured to determine, based on the first indication information, whether to record the random access information between the communication device and the target SN.

In a fourth design, the apparatus may be the master node in the foregoing embodiments, or may be a component (for example, a chip) of the master node.

The transceiver unit is configured to obtain first indication information. The first indication information indicates whether a communication device records random access information between the communication device and a target secondary node SN when random access between the communication device and the target SN fails. The transceiver unit is further configured to send the first indication information.

In a case, the transceiver unit is further configured to receive the random access information between the communication device and the target SN. The transceiver unit is further configured to send the random access information between the communication device and the target SN to the target SN or a source SN.

In a case, the transceiver is configured to obtain the first indication information from the target SN.

In a fifth design, the apparatus may be the master node in the foregoing embodiments, or may be a component (for example, a chip) of the master node.

The transceiver unit is configured to obtain third information. The third information is recorded by a communication device when a connection between the communication device and a first secondary node SN fails, and the third information includes measurement information of a cell. The processing unit is configured to determine, based on the third information, that the first SN is a source SN or a target SN when the communication device performs SN handover. The transceiver unit is further configured to send the third information and second indication information to the first SN. The second indication information indicates whether there is a direct communication interface between the MN and a base station to which the cell whose measurement information is included in the third information belongs.

In a sixth design, the apparatus may be the first secondary node in the foregoing embodiments, or may be a component (for example, a chip) of the first secondary node.

The transceiver unit is configured to obtain third information and second indication information. The third information is recorded by a communication device when a connection between the communication device and the first SN fails, and the third information includes measurement information of a cell. The second indication information indicates whether there is a direct communication interface between a master node MN and a base station to which the cell whose measurement information is included in the third information belongs. The processing unit is configured to select a second SN based on the third information and the second indication information, and there is a direct communication interface between the second SN and the first MN.

In a seventh design, the apparatus may be the network device such as a master node (MN #1) in the foregoing embodiments, or may be a component (for example, a chip) of the network device.

The transceiver unit is configured to receive fifth information, and send a first message to a target secondary node (SN #2) based on the fifth information.

Optionally, the transceiver unit receives a second message from the SN #2. The second message indicates whether the SN #2 needs to adjust an SN mobility parameter, or whether a source secondary node (SN #1) needs to adjust an SN mobility parameter, or whether the MN #1 needs to send the fifth information to the SN #1. Alternatively, the second message indicates that the SN #1 needs to adjust the SN mobility parameter, or the MN #1 needs to send the fifth information to the SN #1.

In an eighth design, the apparatus may be the network device such as a target secondary node (SN #2) in the foregoing embodiments, or may be a component (for example, a chip) of the network device.

The transceiver unit is configured to receive a first message from an MN #1.

Optionally, the first message includes fifth information.

Implementation 1: The first message indicates the SN #2 to feed back, to the MN #1, an SN mobility parameter that needs to be adjusted; or the first message indicates the SN #2 to feed back, to the MN #1, whether the SN #1 needs to adjust an SN mobility parameter; or the first message indicates whether the MN #1 needs to send the fifth information to the SN #1.

Implementation 2: The first message includes feedback indication information, and the feedback indication information indicates the SN #2 to feed back, to the MN #1, an SN mobility parameter that needs to be adjusted; or the feedback indication information indicates the SN #2 to feed back, to the MN #1, whether the SN #1 needs to adjust an SN mobility parameter; or the feedback indication information indicates whether the MN #1 needs to send the fifth information to the SN #1.

Optionally, the determining unit is configured to determine whether an SN mobility parameter needs to be adjusted. This step may be based on at least one or more of the following conditions: the fifth information, access time information of the UE on the SN #2, and whether to send an intra-SN (intra-SN2) primary secondary cell change.

Optionally, the transceiver unit sends a second message to the MN #1. The second message indicates whether the SN #2 needs to adjust an SN mobility parameter, or whether a source secondary node (SN #1) needs to adjust an SN mobility parameter, or whether the MN #1 needs to send the fifth information to the SN #1. Alternatively, the second message indicates that the SN #1 needs to adjust the SN mobility parameter, or the MN #1 needs to send the fifth information to the SN #1.

It should be understood that a specific process in which the units perform the foregoing corresponding steps is described in detail in the foregoing method embodiments. For brevity, details are not described herein again.

It should also be understood that the apparatus herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus may be specifically the first network element in the foregoing embodiments, and may be configured to perform the procedures and/or steps corresponding to the first network element in the foregoing method embodiments. Alternatively, the apparatus may be specifically the network management network element in the foregoing embodiments, and may be configured to perform the procedures and/or steps corresponding to the network management network element in the foregoing method embodiments. To avoid repetition, details are not described herein again.

The foregoing communication apparatus has a function of implementing corresponding steps performed by the apparatus in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, the sending unit in the transceiver unit may be replaced by a transmitter, and the receiving unit in the transceiver unit may be replaced by a receiver). Another unit, such as a processing unit, may be replaced by a processor to separately perform a sending and receiving operation and a related processing operation in each method embodiment.

In addition, the transceiver unit 501 may alternatively be a transceiver circuit (for example, may include a receiving circuit and a sending circuit), and the processing unit may be a processing circuit.

It should be noted that the apparatus in FIG. 5 may be the apparatus in the foregoing method embodiments, or may be a chip or a chip system, for example, a system-on-a-chip (system-on-a chip, SoC). The transceiver unit may be an input/output circuit or a communication interface. The processing unit is a processor, a microprocessor, or an integrated circuit integrated on the chip. This is not limited herein.

An embodiment of this application further provides a communication device. As shown in FIG. 6, the communication device includes a processor 601 and a communication interface 602. The processor 601 is configured to execute a computer program or instructions stored in a memory 603, or read data stored in the memory 603, to perform the methods in the foregoing method embodiments. Optionally, there are one or more processors 601. The communication interface 602 is configured to receive and/or send a signal. For example, the processor 601 is configured to control the communication interface 602 to receive and/or send a signal.

Optionally, as shown in FIG. 6, the communication device further includes the memory 603, and the memory 603 is configured to store a computer program or instructions and/or data. The memory 603 may be integrated with the processor 601, or may be disposed separately. Optionally, there are one or more memories 603.

Optionally, the processor 601, the communication interface 602, and the memory 603 are connected to each other through a bus 604. The bus 604 may be a peripheral component interconnect (peripheral component interconnect, PCI) bus, an extended industry standard architecture (extended industry standard architecture, EISA) bus, or the like. The bus 604 may be classified into an address bus, a data bus, a control bus, and the like. For ease of representation, only one thick line represents the bus in FIG. 6, but this does not mean that there is only one bus or only one type of bus.

In a solution, the communication device is configured to implement operations performed by the communication device, the network device, the master node, or the first secondary node in the foregoing method embodiments.

For example, the processor 601 is configured to execute the computer program or the instructions stored in the memory 603, to implement related operations of the communication device in the foregoing method embodiments, for example, the method performed by the UE #1 in the embodiment shown in FIG. 2.

For another example, the processor 601 is configured to execute the computer program or the instructions stored in the memory 603, to implement related operations of the network device in the foregoing method embodiments, for example, the method performed by the base station #1 in the embodiment shown in FIG. 2.

It should be understood that a processor (such as the processor 601) mentioned in embodiments of this application may be a central processing unit (central processing unit, CPU), a network processor (network processor, NP), or a combination of a CPU and an NP. The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic logic array (generic logic array, GAL), or any combination thereof.

It may be further understood that a memory (such as a memory 603) mentioned in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

A person of ordinary skill in the art may be aware that, in combination with the examples described in embodiments disclosed in this specification, units, and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, by a communication device, listen before talk LBT detection; and
sending, by the communication device, first information based on a target event, wherein the first information comprises detection information of the LBT detection, wherein
the target event comprises any one of the following:
the LBT detection has a potential risk, a communication process between the communication device and a network device has a potential risk, the LBT detection fails, or the communication process between the communication device and the network device fails, wherein
the communication process between the communication device and the network device is performed based on the LBT detection.

2. The method according to claim 1, wherein
that the LBT detection has a potential risk comprises:
a quantity of non-idle detection windows detected during the LBT detection is greater than a first threshold, and the detection information comprises the quantity of non-idle detection windows; and/or
a proportion of an idle detection window in which a difference between an energy detection result and a second threshold is less than a third threshold is greater than a fourth threshold, the detection information comprises the proportion, the first information further comprises the second threshold, and the second threshold is an energy detection threshold for performing the LBT detection.

3. The method according to claim 1 or 2, wherein
that the LBT detection has a potential risk comprises:
before the communication device successfully accesses a cell, a quantity of times that the communication device attempts to access the cell is greater than a fifth threshold, and the cell is a cell of the network device.

4. The method according to claim 3, wherein
that the communication device attempts to access the cell comprises:
the communication device attempts to access the cell on a plurality of physical channels of a same bandwidth part BWP; and
the detection information comprises information about the plurality of physical channels, and one or more of the following:
duration for performing the LBT detection, a proportion of an idle detection window, a proportion of a non-idle detection window, and an energy detection result of a detection window.

5. The method according to claim 3, wherein
that the communication device attempts to access the cell comprises:
the communication device attempts to access the cell in a plurality of BWPs; and
the detection information comprises information about the plurality of BWPs, and one or more of the following:
duration for performing the LBT detection, and a failure indication of the LBT detection.

6. The method according to any one of claims 1 to 5, wherein the method further comprises:
sending, by the communication device, data and/or signaling to the network device in a reference period; and
receiving, by the communication device, negative acknowledgment NACK information or acknowledgment ACK information of the data and/or the signaling from the network device in the reference period, wherein
that the communication process between the communication device and the network device has a potential risk comprises any one of the following:
a proportion of the NACK information is greater than a sixth threshold, a proportion of the ACK information is less than a seventh threshold, and a quantity of retransmissions of the data and/or the signaling is greater than an eighth threshold; and
the first information further comprises any one of the following:
the proportion of the NACK information, the proportion of the ACK information, and the quantity of retransmissions of the data.

7. The method according to claim 1, wherein that the LBT detection fails comprises:
the communication device cannot access a cell on an unlicensed frequency band, and the cell is a cell of the network device; and
the detection information comprises one or more of the following:
a quantity of attempts to access the cell, a proportion of an idle detection window, a proportion of a non-idle detection window, an energy detection result of a detection window, duration for performing the LBT detection, a second threshold, and a quantity of backoff times, wherein
the second threshold is an energy detection threshold for performing the LBT detection.

8. The method according to claim 1, wherein
that the LBT detection fails comprises:
the communication device accesses a cell on a first channel of an unlicensed frequency band, but cannot communicate with the network device through the first channel, and the cell is a cell of the network device; and
the detection information comprises one or more of the following:
a quantity of communication attempts through the first channel, a proportion of an idle detection window, a proportion of a non-idle detection window, an energy detection result of a detection window, duration for performing the LBT detection, a second threshold, and a quantity of backoff times, wherein
the second threshold is an energy detection threshold for performing the LBT detection.

9. The method according to claim 1, wherein the method further comprises:
sending, by the communication device, data and/or signaling to the network device in a reference period; and
receiving, by the communication device, NACK information or ACK information of the data and/or the signaling from the network device in the reference period, wherein
that the communication process between the communication device and the network device fails comprises any one of the following:
a proportion of the NACK information is greater than a ninth threshold, a proportion of the ACK information is less than a tenth threshold, and a quantity of retransmissions of the data and/or the signaling is greater than an eleventh threshold; and
the detection information further comprises one or more of the following:
a quantity of times of performing the LBT detection, a proportion of an idle detection window, a proportion of a non-idle detection window, an energy detection result of a detection window, duration for performing the LBT detection, a second threshold, and a quantity of backoff times, wherein
the second threshold is an energy detection threshold for performing the LBT detection.

10. The method according to claim 2, 7, or 8, wherein
the method further comprises:
receiving, by the communication device, second information, wherein the second information is used to increase the second threshold.

11. The method according to any one of claims 2 to 6, wherein the method further comprises:
receiving, by the communication device, second information, wherein the second information comprises a second channel, and the second information indicates to perform the LBT detection on the second channel, wherein
a quantity of times that the target event occurs on the second channel is less than a twelfth threshold.

12. The method according to claim 8, wherein the method further comprises:
receiving, by the communication device, second information, wherein the second information is used to increase a transmission priority of to-be-transmitted data.

13. The method according to claim 9, wherein the method further comprises:
receiving, by the communication device, second information, wherein
the second information is used to decrease the second threshold; or
the second information is used to decrease a transmission priority of to-be-transmitted data.

14. The method according to any one of claims 2 to 9, wherein the method further comprises:
receiving, by the communication device, third information, wherein the third information indicates to perform communication on a licensed frequency band.

15. The method according to any one of claims 1 to 14, wherein
the first information further comprises one or more of the following:
an identifier of a cell, a moment at which the target event occurs, a type of the to-be-transmitted data, a data amount of the to-be-transmitted data, and the transmission priority of the to-be-transmitted data, wherein
the cell is a cell of the network device.

16. A communication method, comprising:
receiving, by a network device, first information, wherein the first information comprises detection information of listen before talk LBT detection, wherein
the first information is based on a target event, and the target event comprises any one of the following:
the LBT detection has a potential risk, a communication process between a communication device and the network device has a potential risk, the LBT detection fails, and the communication process between the communication device and the network device fails, wherein
the communication process between the communication device and the network device is performed based on the LBT detection.

17. The method according to claim 16, wherein the method further comprises:
determining, by the network device, second information based on the first information, wherein the second information is used to optimize the LBT detection; and
sending, by the network device, the second information.

18. The method according to claim 17, wherein
the detection information comprises a quantity of non-idle detection windows detected during the LBT detection; and/or
the detection information comprises a proportion of an idle detection window in which a difference between an energy detection result and a second threshold is less than a third threshold, the first information further comprises the second threshold, and the second threshold is an energy detection threshold for performing the LBT detection.

19. The method according to claim 17 or 18, wherein
the detection information comprises information about a plurality of channels in a same bandwidth part BWP, and one or more of the following:
duration for performing the LBT detection, a proportion of an idle detection window, a proportion of a non-idle detection window, and an energy detection result of a detection window; or
the detection information comprises information about a plurality of BWPs, and one or more of the following:
the duration for performing the LBT detection, and a failure indication of the LBT detection.

20. The method according to any one of claims 17 to 19, wherein the method further comprises:
receiving, by the network device, data and/or signaling from the communication device in a reference period; and
sending, by the network device, negative acknowledgment NACK information or acknowledgment ACK information of the data and/or the signaling to the communication device in the reference period, wherein
a proportion of the NACK information is greater than a sixth threshold, a proportion of the ACK information is less than a seventh threshold, or the quantity of retransmissions of the data and/or the signaling is greater than an eighth threshold; and
the first information further comprises any one of the following:
the proportion of the NACK information, the proportion of the ACK information, and the quantity of retransmissions of the data and/or the signaling.

21. The method according to claim 17, wherein
the communication device cannot access a cell on an unlicensed frequency band, and the cell is a cell of the network device; and
the detection information comprises one or more of the following:
a quantity of times that the communication device attempts to access the cell, a proportion of an idle detection window, a proportion of a non-idle detection window, an energy detection result of a detection window, duration for performing the LBT detection, a second threshold, and a quantity of backoff times, wherein
the second threshold is an energy detection threshold for performing the LBT detection.

22. The method according to claim 17, wherein
the communication device accesses a cell on a first channel of an unlicensed frequency band, but cannot communicate with the network device through the first channel, and the cell is a cell of the network device; and
the detection information comprises one or more of the following:
a quantity of times that the communication device attempts to perform communication through the first channel, a proportion of an idle detection window, a proportion of a non-idle detection window, an energy detection result of a detection window, duration for performing the LBT detection, a second threshold, and a quantity of backoff times, wherein
the second threshold is an energy detection threshold for performing the LBT detection.

23. The method according to claim 17, wherein the method further comprises:
receiving, by the network device, data and/or signaling from the communication device in a reference period; and
sending, by the network device, negative acknowledgment NACK information or acknowledgment ACK information of the data and/or the signaling to the communication device in the reference period, wherein
a proportion of the NACK information is greater than a ninth threshold, a proportion of the ACK information is less than a tenth threshold, or the quantity of retransmissions of the data and/or the signaling is greater than an eleventh threshold; and
the detection information comprises one or more of the following:
a quantity of times of performing the LBT detection, a proportion of an idle detection window, a proportion of a non-idle detection window, an energy detection result of a detection window, duration for performing the LBT detection, a second threshold, and a quantity of backoff times.

24. The method according to claim 18, 21, or 22, wherein
the second information is used to increase the second threshold.

25. The method according to any one of claims 18 to 20, wherein
the second information comprises a second channel, the second information indicates to perform the LBT detection on the second channel, and a quantity of times that the target event occurs on the second channel is less than a twelfth threshold.

26. The method according to claim 22, wherein
the second information is used to increase a transmission priority of to-be-transmitted data.

27. The method according to claim 23, wherein
the second information is used to decrease the second threshold; or
the second information is used to decrease a transmission priority of to-be-transmitted data.

28. The method according to any one of claims 16 to 27, wherein the method further comprises:
determining, by the network device, third information based on the first information, wherein the third information indicates to perform communication on a licensed frequency band; and
sending, by the network device, the third information.

29. The method according to any one of claims 16 to 28, wherein
the first information further comprises one or more of the following:
an identifier of a cell, a moment at which the target event occurs, a type of the to-be-transmitted data, a data amount of the to-be-transmitted data, and the transmission priority of the to-be-transmitted data, wherein
the cell is a cell of the network device.

30. A communication apparatus, comprising a unit configured to perform the method according to any one of claims 1 to 29.

31. A communication device, comprising a communication interface and a processor, wherein the processor is configured to execute a computer program or instructions, so that the communication device performs the method according to any one of claims 1 to 29.

32. A computer-readable storage medium, comprising a computer program or instructions, wherein when the computer program or the instructions are run on a computer, the computer is enabled to perform the method according to any one of claims 1 to 29.

33. A computer program product, comprising instructions, wherein when the instructions are run on a computer, the computer is enabled to perform the method according to any one of claims 1 to 29.
